# FASCICULE DE BREVET EUROPEEN

(11) **EP 1 760 336 B1**
(45) Date de publication et mention de la délivrance du brevet: **15.10.2008**
(21) Numéro de dépôt: 06119098.9
(22) Date de dépôt: 17.08.2006
(51) Int. Cl.: F16C 7/06

(54) **Bielle à longeur évolutive en fonctionnement**
Pleuel mit im Betrieb variabler Länge
Rod with variable length during operation

(30) Priorité: 30.08.2005 FR 0508856
(43) Date de publication de la demande: 07.03.2007
(73) Titulaire: SNECMA, 75015 Paris (FR)
(72) Inventeur: Bouru, Michel, 77950 Montereau sur le Jard (FR)
(74) Mandataire: Dronne, Guy

(56) Documents cités:
- DE-A1- 3 820 642
- US-A- 3 056 541

## Description

La présente invention a pour objet un dispositif de bielle à longueur variable commandable utilisable notamment mais non exclusivement pour la cinématique de transmission dans un système de commande d'aubes à calage variable, un dispositif de commande pour aubes de redresseur utilisant une telle bielle, un compresseur de turbomachine utilisant un tel dispositif de commande et un turboréacteur utilisant ledit dispositif de bielle.

Les compresseurs de turbomachine et plus particulièrement le stator des turboréacteurs peut comporter un étage d'aubes de redresseur à calage variable agencé sur un carter. Pour commander le positionnement de ces aubes, on utilise un anneau rotatif qui est relié à chaque aube redresseuse par une biellette. Ainsi l'angle d'attaque des aubes peut être contrôlé en fonction des conditions de vol par un système d'asservissement qui commande la rotation de l'anneau. La bielle selon l'invention peut être avantageusement utilisée dans le système d'asservissement.

Plus généralement, dans de nombreuses chaînes cinématiques, on utilise une bielle pour transmettre un mouvement rotatif menant vers un mouvement rotatif mené. Dans les systèmes connus, cette bielle a une longueur constante.

On connaît également des bielles à longueur variable mais pour lesquelles les possibilités de modification de la longueur de la bielle ne peuvent être utilisées que lorsque la bielle n'est pas en fonctionnement.

Dans certains systèmes de transmission, il est nécessaire de pouvoir mettre en oeuvre une loi de transmission d'un mouvement rotatif vers un autre mouvement rotatif qui soit relativement complexe.

Un objet de la présente invention est de fournir une bielle dont la longueur est variable lorsque cette bielle est en fonctionnement.

Une telle bielle est montrée dans le document DE 3 820 642 A.

Il est également intéressant qu'une telle bielle puisse être montée dans le système cinématique pour remplacer une bielle à longueur fixe sans que le reste de la chaîne cinématique n'ait à être modifiée.

Un premier objet de la présente invention est de fournir un dispositif de bielle qui, d'une part a une longueur variable en fonctionnement et qui, d'autre part a une constitution telle qu'elle puisse être substituée à une bielle de longueur fixe dans un système de transmission cinématique.

Pour atteindre ce but selon l'invention, le dispositif de bielle à longueur variable commandable se caractérise en ce qu'il comprend :
- une première demi-bielle ayant une première extrémité de connexion à système menant, et une deuxième extrémité,
- une deuxième demi-bielle ayant une première extrémité de connexion à un système mené, et une deuxième extrémité,
- un organe rotatif de déplacement comportant un arbre de mise en rotation, et une tête rotative coopérant avec lesdites deuxièmes extrémités desdites bielles pour provoquer un déplacement inverse desdites demi-bielles,
- des moyens formant palier dans lesquels est monté ledit arbre de mise en rotation,
- deux moyens de guidage en translation selon deux directions au moins parallèles desdites deux demi-bielles, lesdits moyens de guidage étant mécaniquement liés auxdits moyens formant palier ; et
- des moyens d'entraînement en rotation dans les deux sens dudit arbre.

Selon une loi prédéterminée par quoi on peut faire varier la longueur de la bielle selon une loi correspondant à la loi prédéterminée des moyens d'entraînement en rotation, lorsque la bielle est en fonctionnement.

On comprend que, grâce au fait que les deux demi-bielles sont réunies entre elles par un organe rotatif de déplacement comportant un arbre de mise en rotation, il est possible de donner à l'organe rotatif de déplacement une loi de rotation qui permettra ainsi d'obtenir une loi de variation de longueur de la bielle et donc de la relation cinématique entre les systèmes menant et mené.

On voit également que les premières extrémités des deux demi-bielles se présentent exactement comme les extrémités d'une bielle de type classique et que la bielle selon l'invention peut être substituée à une bielle classique dans un système cinématique sans que les autres parties de celui-ci aient à être modifiées.

De préférence, les moyens de guidage du dispositif de bielle comprennent d'une part une portion d'une demi-bielle proche de sa deuxième extrémité présentant une surface externe cylindrique à génératrices parallèles à l'axe de la demi-bielle et d'autre part un élément de guidage rigidement relié aux moyens formant palier présentant un passage conjugué de ladite surface cylindrique pour assurer le guidage en translation de la demi-bielle.

Par surface cylindrique, il faut entendre toute surface engendrée par le déplacement d'une génératrice sur une courbe fermée qui peut être un cercle, une ellipse, un carré, un rectangle, etc.

On comprend que, grâce à ces éléments de guidage, la course relative des deux demi-bielles est réalisée dans une direction parfaitement définie.

De préférence encore, elle comprend un boîtier dans lequel sont montés les moyens formant palier et les deux éléments de guidage.

Selon un premier mode de mise en oeuvre du dispositif de bielle la tête rotative de l'organe rotatif est un palonnier comportant deux bras s'étendant radialement par rapport audit arbre, chaque bras étant relié à la deuxième extrémité d'une demi-bielle.

On comprend que, dans ce premier mode de réalisation, en imprimant à l'arbre de l'organe rotatif une loi particulière de rotation les deux demi-bielles reliées aux extrémités des bras du palonnier verront leur longueur varier en fonction de la loi choisie.

Selon un deuxième mode de mise en oeuvre du dispositif de bielle chaque demi-bielle comporte à proximité de sa deuxième extrémité une portion formant crémaillère et en ce que la tête de l'organe rotatif est un pignon engrenant avec lesdites crémaillères.

On comprend que ce deuxième mode de mise en oeuvre présente les mêmes avantages que le premier et que de plus, il permet d'avoir une course de chaque demi-bielle plus importante que dans le premier mode de mise en oeuvre du fait que la tête de l'organe rotatif peut effectuer plusieurs tours.

Un deuxième objet de la présente invention est de fournir un dispositif de commande pour aubes de redresseur à calage variable caractérisé en ce qu'il comprend un dispositif de bielle du type mentionné ci-dessus.

Un troisième objet de l'invention est de fournir un compresseur de turbomachine caractérisé en ce qu'il comprend un dispositif de bielle du type défini ci-dessus.

Un quatrième objet de l'invention est de fournir une turbomachine caractérisée en ce qu'elle comprend un dispositif de bielle du type défini ci-dessus.

D'autres caractéristiques et avantages de l'invention apparaîtront mieux a la lecture de la description qui suit de plusieurs modes de réalisation de l'invention donnés à titre d'exemples non limitatifs. La description se réfère aux figures annexées sur lesquelles :
- la figure 1 est une vue en perspective éclatée d'un premier mode de réalisation de la bielle selon l'invention sous une forme simplifiée,
- la figure 2 est une vue en perspective éclatée de la partie de la bielle de la figure 1,
- la figure 2A est une vue partielle en perspective éclatée de la bielle équipée d'un premier système de commande,
- la figure 2B est une vue partielle en perspective éclatée de la bielle équipée d'un deuxième système de commande,
- la figure 2C est une vue partielle en perspective éclatée de la bielle équipée d'un troisième système de commande ;
- la figure 3 est une vue de dessus partielle d'un deuxième mode de réalisation de la bielle selon l'invention ;
- la figure 4 est une vue en perspective partielle de la bielle selon la figure 3 ;
- la figure 5 est une vue en perspective de l'ensemble de la bielle selon le deuxième mode de mise en oeuvre ; et
- la figure 6 est une vue en coupe médiane de la partie centrale de la bielle selon le deuxième mode de mise en oeuvre montrant un système de réglage de l'entre-axe des deux demi-bielles, par bagues formant excentriques ; et
- les figures 6A à 6C montrent en perspective les différents éléments des bagues permettant leur rotation et leur immobilisation.

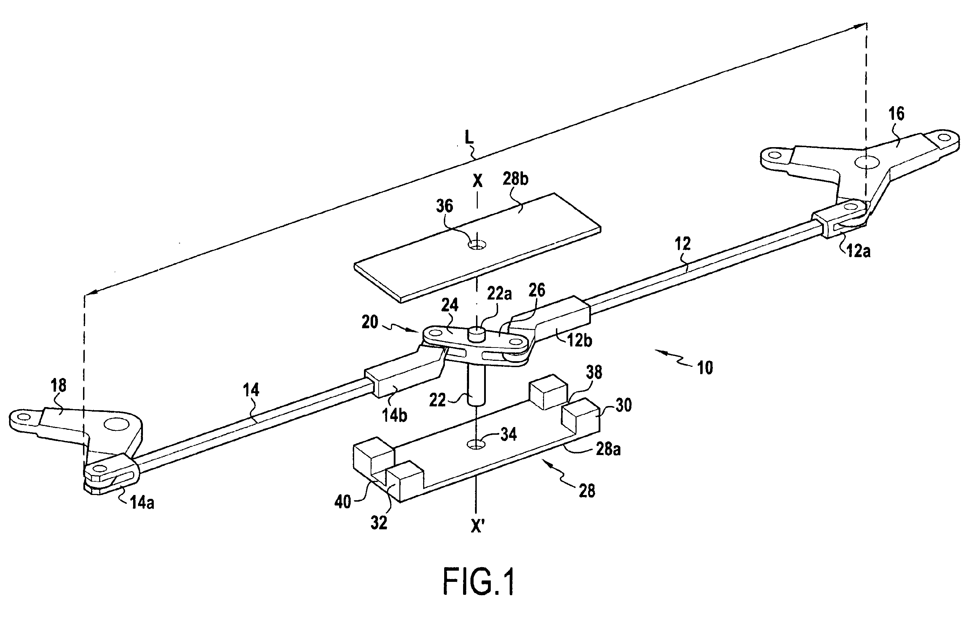

En se référant tout d'abord à la figure 1, on va décrire l'ensemble d'un premier mode de réalisation du dispositif de bielle 10 à longueur variable.

La bielle est constituée par deux demi-bielles 12 et 14 qui comportent chacune une première extrémité 12a 14a de raccordement respectivement à un système rotatif menant 16 et à un système rotatif mené 18 et deux extrémités 12b et 14b de raccordement à un système de palonnier 20. Le palonnier 20 est constitué par un arbre de mise en rotation 22 et par deux bras 24 et 26 s'étendant perpendiculairement à l'axe géométrique XX' de l'arbre 22. Les extrémités 12b et 14b des demi-bielles 12 et 14 sont raccordées aux extrémités des bras 24 et 26 du palonnier. Le palonnier 20 est monté dans un boîtier 28 formé, par exemple par une plaque inférieure 28a munie de deux bords d'extrémité 30 et 32 et par une plaque supérieure 34 fixée sur les rebords 30 et 32 de la plaque inférieure. Les plaques inférieure 28a et supérieure 28b comportent, lorsqu'elles sont solidarisées, deux paliers alignés 34 et 36 dans lesquels sont montés respectivement l'arbre 22 de mise en rotation du palonnier et une extension 22a de cet arbre.

Les rebords d'extrémité 30 et 32 de la plaque inférieure 28a comportent deux passages alignés 38 et 40 dans lesquels peuvent se déplacer à coulissement les extrémités 12b et 14b des demi-bielles 12 et 14. Comme on l'expliquera plus en détail ultérieurement, les passages 38 et 40 constituent des éléments de guidage des extrémités des demi-bielles et donc des bielles.

On comprend dès à présent le mode de fonctionnement du premier mode de réalisation de la bielle 10 à longueur variable. Un système de commande de rotation de l'arbre 22 du palonnier permet d'imposer à celui-ci une loi propre de rotation autour de l'axe XX' par rapport au boîtier 28. Cette loi de rotation provoque bien sûr la rotation des bras 24 et 26 du palonnier et donc la modification de la longueur totale L de la bielle. En imposant au palonnier 20 une loi de mise en rotation convenable, on confère à la bielle 10 une loi de variation de sa longueur correspondante.

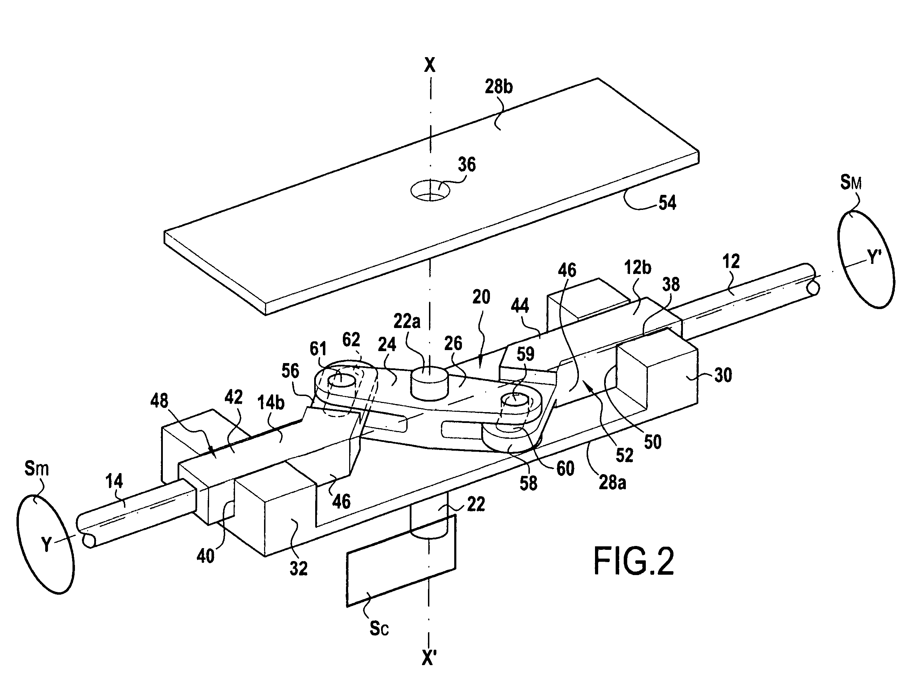

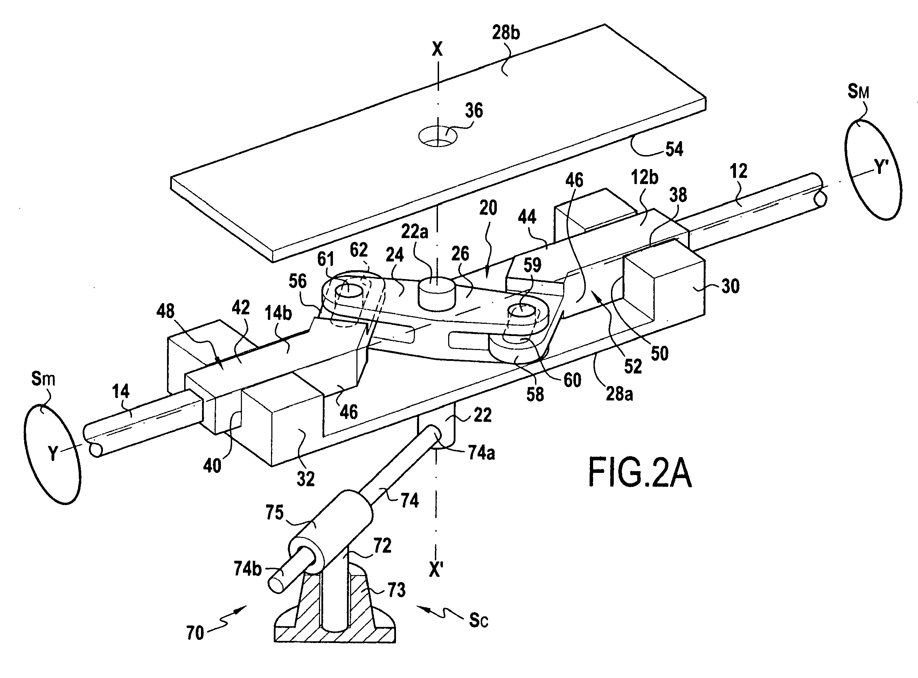

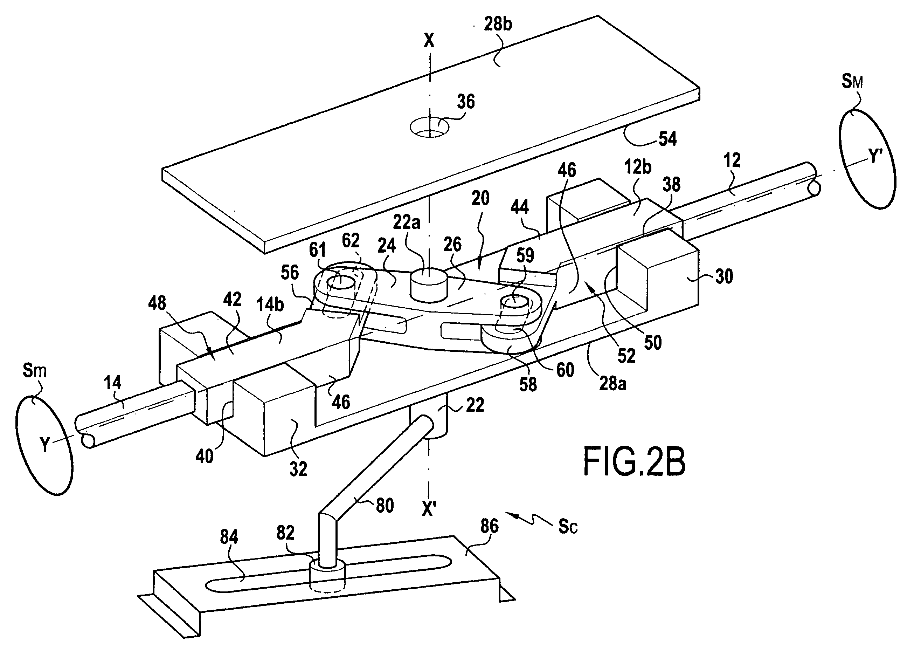

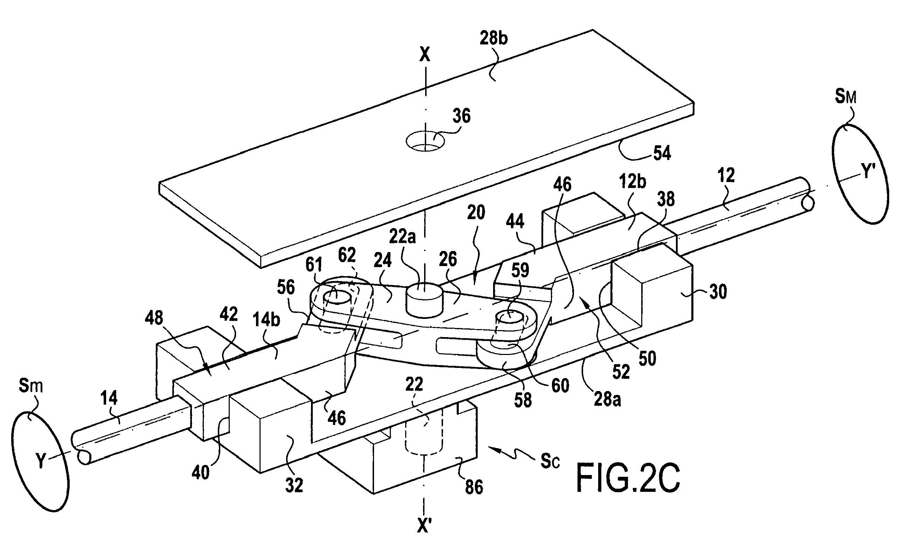

Comme le montre mieux la figure 2, à leur deuxième extrémité 12b et 14b, les demi-bielles 12 et 14 sont constituées par des pièces d'extrémité 42 et 44 dont la section droite est carrée ou rectangulaire et supérieure à celle de la partie courante des demi-bielles. Ces pièces d'extrémité 42 et 44 définissent ainsi deux faces parallèles latérales 46 et deux faces supérieure et inférieure 48. Ces quatre surfaces des pièces d'extrémité 42 et 44 sont rectifiées pour constituer des faces de guidage. Les pièces d'extrémité 42 et 44 sont assujetties à se déplacer à coulissement dans les passages 38 et 40 ménagés dans les bords d'extrémité 30 et 32 de la partie inférieure 28a du boîtier 28. Les faces latérales 50 des passages 38 et 40 ainsi que le fond 52 de ces passages sont également rectifiés. Il en va de même de la face inférieure 54 de la plaque 28b du boîtier. Ainsi, les pièces d'extrémité 42 et 44 des demi-bielles sont guidées en translation par les passages 38 et 40 du boîtier, ces passages étant alignés sur un même axe YY' qui constitue en même temps l'axe longitudinal de la bielle 10. Les pièces d'extrémité 42 et 44 des demi-bielles se terminent par une portion d'épaisseur réduite 56 et 58 dans lesquelles sont ménagés des trous oblongs 60 et 62 pour le raccordement des demi-bielles aux bras 24 et 26 du palonnier 20. De plus, les parties terminales 56 et 58 sont coudées par rapport aux axes longitudinaux des demi-bielles 12 et 14 de telle manière que celles-ci soient alignées. Les bras 24 et 26 du palonnier constituent des étriers dans lesquels sont engagés des axes 59 et 61 pénétrant dans les trous oblongs 62 et 60.

On comprend qu'ainsi, lorsque le palonnier est animé d'un mouvement de rotation, cette rotation est convertie en un mouvement de translation des demi bielles 12 et 14 selon l'axe longitudinal YY' de la bielle. De préférence, les trous 34 et 36 dans lesquels sont montés l'arbre 22 du palonnier et son extrémité 22a sont munis de palier.

Ainsi qu'on l'a déjà indiqué brièvement, différents systèmes de commande S_{c} de la loi horaire de rotation du palonnier 20 peuvent être utilisés selon la loi de variation de la longueur de la bielle que l'on souhaite obtenir. Sur la figure 2A, on a représenté un premier système référencé 70 qui est constitué par un demi-arbre 72 monté pivotant dans un palier 73 solidaire d'un bâti fixe. Ce demi-arbre qui est parallèle à l'arbre de commande 22 est raccordé à un demi-bras 74 orthogonal à son axe de pivotement. L'extrémité 74a du demi-bras 74 est elle-même solidaire de l'arbre 22 du palonnier en étant orthogonale à celui-ci, alors que sa deuxième extrémité 74b coulisse dans un manchon formant palier 75 solidaire de l'extrémité du demi-arbre vertical 72.

On obtient ainsi une loi de rotation de l'arbre 22 du palonnier qui consiste dans le fait que, lors des déplacements de la bielle, l'arbre 22 du palonnier est assujetti à rester sur un cercle de rayon variable centré sur l'axe géométrique du demi-arbre 72 du système de commande 70.

Sur la figure 2B on a représenté un deuxième mode de réalisation du système de commande S_{c} de la loi de rotation du palonnier. Ce système est constitué par un bras 80 orthogonal à l'arbre 22 du palonnier dont la deuxième extrémité 80a est équipée d'un galet 82. Le galet 82 est assujetti à se déplacer dans une fente 84 ménagée dans une plaque 86 solidaire d'un bâti. La fente 84 a une forme convenable pour imposer à l'arbre 22 du palonnier une loi de rotation correspondant à la loi de variation de la longueur de la bielle 10 souhaitée.

Sur la figure 2C, on a représenté un troisième exemple de réalisation du système de commande S_{c} de la loi de rotation du palonnier 20. Ce système est constitué par un moteur pas à pas 86 dont le boîtier est directement fixé sur la partie inférieure 28a du boîtier 28 de la bielle 10. En commandant convenablement la rotation du moteur pas à pas 86 en relation avec la rotation du système menant Sₘ on obtient une loi de variation de la longueur de la bielle souhaitée.

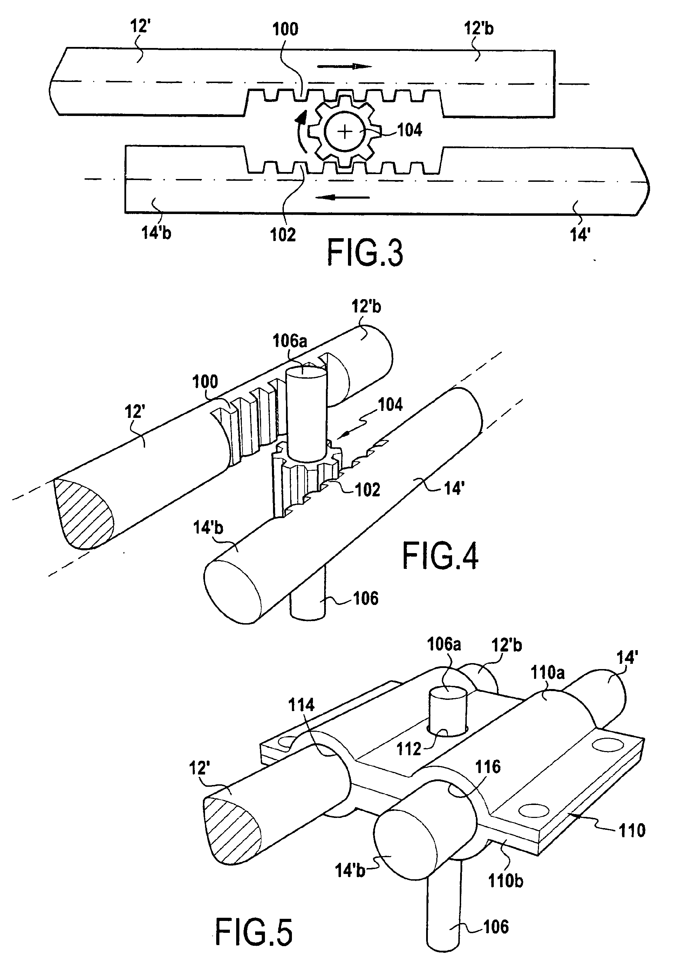

Sur la figure 3, on a représenté de façon très simplifiée un deuxième mode de réalisation de la bielle à longueur variable selon l'invention. Celle-ci est toujours constituée par deux demi-bielles qui portent les références 12' et 14'. Les deuxièmes extrémités 12'b et 14'b des demi-bielles sont équipées sur leurs faces en regard d'une crémaillère 100 et 102. Le palonnier 20 du premier mode de réalisation est remplacé par un pignon denté 104 dont l'axe de rotation est orthogonal aux axes longitudinaux des demi-bielles 12' et 14'. On comprend que le pignon 104 engrène avec les crémaillères 100 et 102 des demi-bielles 12' et 14'. Ainsi selon le sens de la rotation imprimée au pignon 104 chaque demi-bielle sera déplacée dans des directions parallèles opposées correspondant soit à une diminution de la longueur totale de la bielle soit à une augmentation de cette longueur.

La figure 4 est une vue éclatée en perspective simplifiée du deuxième mode de réalisation. Sur cette figure, on voit les crémaillères 100 et 102 des demi-bielles 12' et 14' ainsi que le pignon de commande 104. Le pignon de commande 104 est solidaire d'un arbre de commande 106 dont l'extrémité 106a se prolonge au delà du pignon 104.

Comme le montre la figure 5, les extrémités 12b et 14b des demi-bielles 12' et 14' ainsi que le pignon de commande 104 sont montés dans un boîtier 110 constitué par une demi-coquille supérieure 110a et une demi-coquille inférieure 110b. Le boîtier 110 définit dans son plan médian deux paliers 112 respectivement ménagés dans chacune des demi-coquilles pour le montage de l'arbre de commande 106 et de son extension 106a. Le boîtier 110 définit également des passages de guidage en translation des extrémités 12'b et 14'b des demi-bielles. Dans le mode de réalisation particulier considéré, les demi-bielles 12' et 14' sont à section droite circulaire et les passages de guidage 114 et 116 sont donc également à section droite circulaire. Bien entendu, ces passages sont parallèles puisque les demi-bielles sont décalées. Le boîtier 110 définit également un volume interne communiquant avec les passages de guidage 114 et 116 pour recevoir le pignon 104 et lui permettre d'engrèner avec les crémaillères 100 et 102.

Il va de soi que les trois systèmes de commande de la loi de rotation de l'arbre 22 du palonnier 20 du premier mode de réalisation peuvent être utilisés pour fixer la loi de rotation du pignon 104 utilisé dans le deuxième mode de mise en oeuvre de l'invention.

Il faut noter également que le deuxième mode de réalisation présente tous les avantages du premier mode de réalisation. Il présente en outre l'avantage de permettre une variation de la longueur totale de la bielle plus importante puisque dans le cas du palonnier, l'angle de rotation de celui-ci est limité alors que dans le cas du pignon 104 engrenant avec les crémaillères 100 et 102, la rotation du pignon, elle, n'est pas limitée.

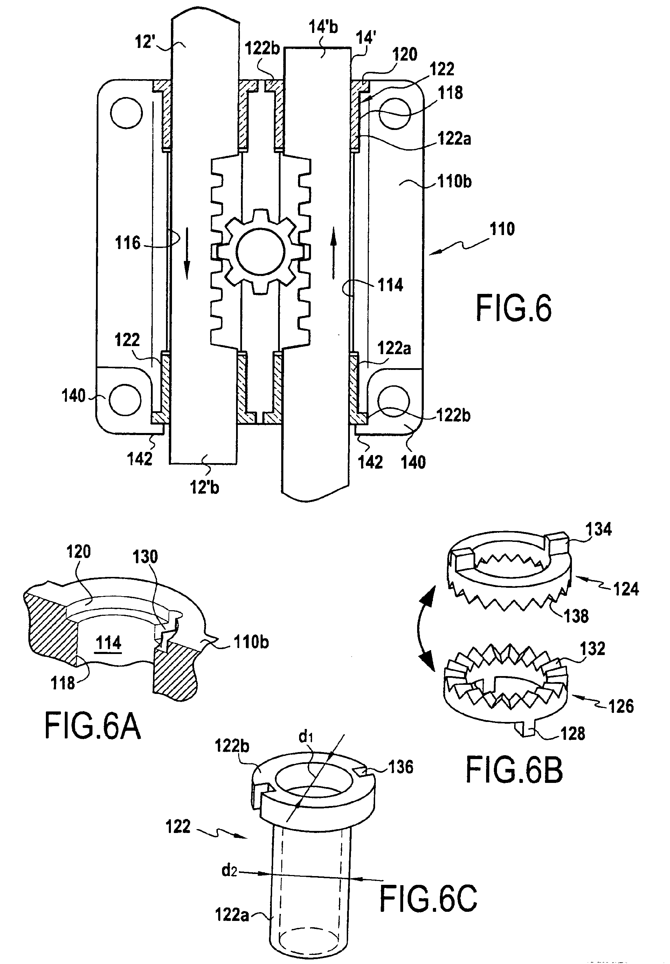

Dans le cas du deuxième mode de réalisation de la bielle, il est important de pouvoir régler avec une grande précision l'entre-axe entre les deux demi-bielles 12' et 14' afin d'assurer un engrènement à jeu minimal entre le pignon 104 et les crémaillères 100 et 102 des demi-bielles. La figure 6 montre un exemple de réalisation d'un système de réglage de cet entre-axe.

Sur la figure 6, on a représenté un exemple de réalisation du système de réglage de l'entre-axe des deux demi-bielles 12' et 14'. De façon simplifiée, ce réglage est obtenu à l'aide de deux bagues excentrées montées sur chaque demi-bielle de part et d'autre de la crémaillère et engagées dans les passages ménagés dans le boîtier.

Plus précisément sur la figure 6, on a représenté la demi-coquille inférieure 110b du boitier110. Dans chaque passage 114, 116 on ménage à ses extrémités un premier alésage interne 118 de diamètre supérieur au diamètre courant des passages 114 et 116 épaulé par un lamage de diamètre encore supérieur mais de longueur réduite 120. Dans chacun des alésages 118 120, on monte une bague formant excentrique 122, chaque bague étant constituée par une portion tubulaire 122a engagée dans l'alésage 118 et une collerette d'extrémité 122b engagée dans le lamage 120. La face externe des bagues formant excentrique est coaxiale avec les axes YY' des passages 114 et 116 alors que le diamètre interne d1 de ces bagues définit une surface interne excentrée par rapport aux axes YY' destinés à recevoir les portions des demi-bielles disposées de part et d'autre des crémaillères 100 et 102. Ces bagues 122 forment des paliers de guidage pour les demi-bielles. Ainsi en réglant l'orientation angulaire des quatre bagues formant excentrique 122, on peut régler de façon précise l'entre-axe e entre les demi-bielles 12' et 14'.

Il va de soi que les bagues formant excentrique 122 doivent pouvoir être immobilisées en translation et en rotation par rapport au boîtier 110 lorsqu'on leur a donné l'orientation angulaire convenable pour obtenir l'entre-axe souhaité entre les demi-bielles.

Les figures 6A à 6C montrent un exemple de réalisation des moyens d'immobilisation des bagues 122.

Pour autoriser la rotation des bagues 122 et leur immobilisation en rotation après avoir amené la bague dans sa position angulaire requise, on interpose entre la collerette 122b et le fond de l'alésage 120 deux rondelles 124 et 126. La rondelle inférieure 126 présente sur sa face inférieure deux crabots 128 qui peuvent pénétrer dans des rainures 130 ménagées dans le fond du lamage 120. La face supérieure de la rondelle 126 présente des crans 132 disposés radialement. La rondelle 124 présente sur sa face supérieure deux crabots 134 qui peuvent pénétrer dans des encoches 136 ménagées dans la collerette 122b de la bague 122. Sa face inférieure est munie de crans 138 conjugués des crans 132 de la rondelle 126. L'ensemble constitué par la bague 122 et les rondelles 124 et 126 est immobilisé en translation dans les alésages 118 et 120 par une plaquette 140 vissée sur le boîtier 110. Chaque plaquette 140 présente une extension 142 qui appuie sur la face externe de la collerette 122b de la bague 122.

Lorsque les plaquettes 140 sont vissées sur le boîtier 110, les crans 132 et 138 sont en prise et la bague est immobilisée en rotation. Au contraire, lorsque les plaquettes sont dévissées, les crans 132 et 138 ne sont plus en prise et il est possible de faire tourner la bague 122 et la rondelle 124 par rapport à la rondelle 126 solidaire en rotation du boîtier. Grâce au grand nombre de crans 132 et 138, il est possible de régler avec précision l'orientation angulaire des bagues 122 et donc l'entre-axe entre les demi-bielles 12' et 14'.

Il va de soi que d'autres systèmes de réglage de l'entre-axe des deux demi-bielles pourraient être utilisés.

## Revendications

1. Dispositif de bielle à longueur variable commandable, comprenantd :
- une première demi-bielle (12) ayant une première extrémité de connexion à système menant, et une deuxième extrémité,
- une deuxième demi-bielle (14) ayant une première extrémité de connexion à un système mené, et une deuxième extrémité,
- un organe rotatif de déplacement (20,104) comportant un arbre de mise en rotation (22,106), et une tête rotative coopérant avec lesdites deuxièmes extrémités desdites bielles pour provoquer un déplacement inverse desdites demi-bielles,
- des moyens formant palier (34,36,112) dans lesquels est monté ledit arbre de mise en rotation ;, et
- deux moyens de guidage en translation (38,42,114,116) selon deux directions au moins parallèles desdites deux demi-bielles, lesdits moyens de guidage étant mécaniquement liés auxdits moyens formant palier, ledit dispositif se **caractérisant en ce qu**'il comprend en outre :
- des moyens d'entraînement (Sc) en rotation dans les deux sens dudit arbre selon une loi prédéterminée par quoi on peut faire varier la longueur de la bielle selon une loi correspondant à la loi prédéterminée des moyens d'entraînement en rotation, lorsque ladite bielle est en fonctionnement.

2. Dispositif de bielle selon la revendication 1, **caractérisé en ce que** lesdits chaque moyen de guidage (38,42,114,116) comprend une portion d'une demi-bielle proche de sa deuxième extrémité présentant une surface externe cylindrique à génératrice parallèle à l'axe de la demi-bielle et un élément de guidage mécaniquement relié aux moyens formant palier (34,36,112) présentant un passage conjugué de ladite surface cylindrique.

3. Dispositif de bielle selon la revendication 2, **caractérisé en ce qu'**elle comprend un boîtier (28,110) dans lequel sont formés lesdits moyens formant palier et les deux éléments de guidage.

4. Dispositif de bielle selon l'une quelconque des revendications 1 à 3, **caractérisé en ce que** la tête rotative de l'organe rotatif est un palonnier (20) comportant deux bras s'étendant radialement par rapport audit arbre, chaque bras étant relié à la deuxième extrémité d'une demi-bielle.

5. Dispositif de bielle selon la revendication 4, **caractérisé en ce que** lesdits passages des éléments de guidage sont alignés.

6. Dispositif de bielle selon l'une quelconque des revendications 1 à 3, **caractérisé en ce que** chaque demi-bielle comporte à proximité de sa deuxième extrémité une portion formant crémaillère (100,102) et **en ce que** la tête de l'organe rotatif est un pignon engrenant avec lesdites crémaillères.

7. Dispositif de bielle selon la revendication 6, **caractérisé en ce que** les passages des éléments de guidage ont des axes parallèles entre eux.

8. Dispositif de bielle selon l'une quelconque des revendications 6 et 7, **caractérisé en ce que** lesdits moyens de guidage de l'extrémité de chaque demi-bielle comprennent en outre deux bagues formant excentrique (122) dans lesquelles sont montées à coulissement les demi-bielles - chaque bague étant disposée de part et d'autre de la portion formant crémaillère.

9. Dispositif de bielle selon la revendication 8, **caractérisé en ce que** les moyens de guidage comprennent en outre des moyens d'immobilisation en rotation et en translation desdites bagues.

10. Dispositif de bielle selon l'une quelconque des revendications 1 à 9, **caractérisé en ce que** lesdits moyens de mise en rotation (Sc) comprennent un moteur (86) dont l'arbre de sortie est mécaniquement relié à l'arbre de l'organe rotatif.

11. Dispositif de bielle selon l'une quelconque des revendications 1 à 9, **caractérisé en ce que** lesdits moyens de mise en rotation (Sc) comprennent un bras (74) orthogonal a l'arbre de commande dont une extrémité est solidaire de l'arbre de commande et dont l'autre extrémité est montée coulissante dans un palier solidaire d'un axe (72) de pivotement fixe par rapport à un carter.

12. Dispositif de bielle selon l'une quelconque des revendications 1 à 9, **caractérisé en ce que** lesdits moyens de mise en rotation (Sc) comprennent un bras orthogonal à l'arbre de commande dont une première extrémité est solidaire dudit arbre et dont l'autre extrémité est solidaire d'un galet assujetti à se déplacer dans une fente fixe.

13. Dispositif de commande pour aubes de redresseur à calage variable **caractérisé en ce qu'**il comprend un dispositif de bielle selon l'une quelconque des revendications 1 à 12.

14. Compresseur de turbomachine, **caractérisé en ce qu'**il comprend un dispositif de bielle selon l'une quelconque des revendications 1 à 12.

15. Turbomachine **caractérisée en ce qu'**elle comprend un dispositif de bielle selon l'une quelconque des revendications 1 à 12.

## Claims

1. A controllable variable length link device comprising:
- a first half-link (12) having a first end for connection to a driving system and a second end,
- a second half-link (14) having a first end for connection to a driven system and a second end,
- a rotary displacement member (20, 104) including a rotator shaft (22, 106) and a rotary head cooperating with said second ends of said links to cause opposite movement of said half-links,
- bearing means (34, 36, 112) in which said rotator shaft is mounted; and
- two means (38, 42, 114, 116) for guiding said two half-links in translation in at least two parallel directions, said guiding means being mechanically connected to said bearing means, said device being **characterized in that** it further comprises:
- means (Sc) for driving said shaft in rotation in both directions in accordance with a predetermined law, by which the length of the link may be varied according to a law corresponding to the predetermined law of the rotational driving means, when said link is operating.

2. The link device according to claim 1, **characterized in that** said guide means (38, 42, 114, 116) each comprise a portion of a half-link close to its second end having a cylindrical external surface with generator parallel to the axis of said half-link and a guide member mechanically connected to said bearing means (34, 36, 112) having a passage conjugate with said cylindrical surface.

3. The link device according to claim 2, **characterized in that** it further comprises a casing (28,110) in which said bearing means and both guide members are formed.

4. The link device according to any one of claims 1 to 3, **characterized in that** the rotary head of the rotary member is a yoke (20) including two arms extending radially relative to said shaft, each arm being connected to the second end of one half-link.

5. The link device according to claim 4, **characterized in that** said passages in the guide members are aligned.

6. The link device according to any one of claims 1 to 3, **characterized in that** each half-link has near its second end a rack portion (100, 102) and **in that** the head of the rotary member is a pinion meshing with said racks.

7. The link device according to claim 6, **characterized in that** the passages in the guide members have axes parallel to each other.

8. The link device according to any one of claims 6 and 7, **characterized in that** said means for guiding the end of each half-link further comprise two rings forming cams (122) in which said half-links are slidably mounted, said rings being positioned on either side of the rack portion.

9. The link device according to claim 8, **characterized in that** the guide means further comprise means for immobilizing said rings against rotation and against translation.

10. The link device according to any one of claims 1 to 9, **characterized in that** said rotation means (Sc) comprise a motor (86), the output shaft of which is mechanically connected to the shaft of the rotary member.

11. The link device according to any one of claims 1 to 9, **characterized in that** said rotation means (Sc) comprise an arm (74) orthogonal to the drive shaft and one end of which is firmly attached to said drive shaft and the other end of which is slidably mounted in a bearing firmly attached to a pivot axis (72) fixed relative to a case

12. The link device according to any one of claims 1 to 9, **characterized in that** said rotation means (Sc) comprise an arm orthogonal to the drive shaft and a first end of which is firmly attached to said drive shaft and the other end of which is firmly attached to a roller constrained to move in a fixed slot.

13. A variable pitch guide vane control device **characterized in that** it comprises a link device according to any one of claims 1 to 12.

14. A turbomachine compressor **characterized in that** it comprises a link device according to any one of claims 1 to 12.

15. A turbomachine **characterized in that** it comprises a link device according to any one of claims 1 to 12.

## Patentansprüche

1. Übertragungsstangenvorrichtung mit steuerbarer variabler Länge, die folgendes umfaßt:
- eine erste halbe Übertragungsstange (12), die ein erstes Ende zum Verbinden mit einem Antriebssystem sowie ein zweites Ende aufweist,
- eine zweite halbe Übertragungsstange (14), die ein erstes Ende zum Verbinden mit einem Abtriebssystem sowie ein zweites Ende aufweist,
- ein drehbares Bewegungsorgan (20, 104), das eine Drehwelle (22, 106) sowie einen drehbaren Kopf umfaßt, der mit den beiden Enden der Übertragungsstangen zusammenwirkt, um eine umgekehrte Bewegung der halben Übertragungsstangen zu bewirken,
- lagernde Mittel (34, 36, 112), in denen die Drehwelle angebracht ist, und
- zwei Mittel (38, 42, 114, 116), um die zwei halben Übertragungsstangen entlang zweier, wenigstens paralleler Richtungen verschieblich zu führen, wobei die Führungsmittel mit den lagernden Mitteln mechanisch verbunden sind, wobei die Vorrichtung **dadurch gekennzeichnet ist, daß** sie ferner folgendes umfaßt:
- Mittel (Sc) zum Drehantreiben der Welle in beiden Richtungen nach einem vorbestimmten Gesetz, wodurch die Länge der Übertragungsstange nach einem Gesetz, das dem vorbestimmten Gesetz der Drehantriebsmittel entspricht, variiert werden kann, wenn die Übertragungsstange in Betrieb ist.

2. Übertragungsstangenvorrichtung nach Anspruch 1, **dadurch gekennzeichnet, daß** jedes Führungsmittel (38, 42, 114, 116) einen Abschnitt einer halben Übertragungsstange nahe ihres zweiten Endes, mit einer zylindrischen Außenfläche mit zur Achse der halben Übertragungsstange paralleler Mantellinie sowie ein mit den lagernden Mitteln (34, 36, 112) mechanisch verbundenes Führungselement, das einen der zylindrischen Fläche zugeordneten Durchgang aufweist, umfaßt.

3. Übertragungsstangenvorrichtung nach Anspruch 2, **dadurch gekennzeichnet, daß** sie ein Gehäuse (28, 110) aufweist, in dem die lagernden Mittel sowie die beiden Führungselemente ausgebildet sind.

4. Übertragungsstangenvorrichtung nach einem der Ansprüche 1 bis 3, **dadurch gekennzeichnet, daß** der drehbare Kopf des drehbaren Organs ein zweiarmiger Hebel (20) ist, der zwei Arme aufweist, die sich bezogen auf die Welle radial erstrecken, wobei jeder Arm mit dem zweiten Ende einer halben Übertragungsstange verbunden ist.

5. Übertragungsstangenvorrichtung nach Anspruch 4, **dadurch gekennzeichnet, daß** die Durchgänge der Führungselemente miteinander fluchten.

6. Übertragungsstangenvorrichtung nach einem der Ansprüche 1 bis 3, **dadurch gekennzeichnet, daß** jede halbe Übertragungsstange in der Nähe ihres zweiten Endes einen eine Zahnstange bildenden Abschnitt (100, 102) umfaßt, und daß der Kopf des drehbaren Organs ein Ritzel ist, das mit den Zahnstangen kämmt.

7. Übertragungsstangenvorrichtung nach Anspruch 6, **dadurch gekennzeichnet, daß** die Durchgänge der Führungselemente zueinander parallele Achsen haben.

8. Übertragungsstangenvorrichtung nach einem der Ansprüche 6 und 7, **dadurch gekennzeichnet, daß** die Mittel zum Führen des Endes jeder halben Übertragungsstange ferner zwei exzenterbildende Ringe (122) umfassen, in denen die halben Übertragungsstangen verschiebbar angebracht sind, wobei jeder Ring auf beiden Seiten des eine Zahnstange bildenden Abschnittes angeordnet ist.

9. Übertragungsstangenvorrichtung nach Anspruch 8, **dadurch gekennzeichnet, daß** die Führungsmittel ferner Mittel zum Festlegen der Ringe gegen ein Drehen und ein Verschieben umfassen.

10. Übertragungsstangenvorrichtung nach einem der Ansprüche 1 bis 9, **dadurch gekennzeichnet, daß** die Drehmittel (Sc) einen Motor (86) aufweisen, dessen Abtriebswelle mit der Welle des drehbaren Organs mechanisch verbunden ist.

11. Übertragungsstangenvorrichtung nach einem der Ansprüche 1 bis 9, **dadurch gekennzeichnet, daß** die Drehmittel (Sc) einen zur Antriebswelle orthogonalen Arm (74) umfassen, dessen eines Ende mit der Antriebswelle fest verbunden ist und dessen anderes Ende in einem Lager, das mit einer gegenüber einem Gehäuse festen Schwenkachse (72) fest verbunden ist, verschiebbar angebracht ist.

12. Übertragungsstangenvorrichtung nach einem der Ansprüche 1 bis 9, **dadurch gekennzeichnet, daß** die Drehmittel (Sc) einen zur Antriebswelle orthogonalen Arm umfassen, von dem ein erstes Ende mit der Welle fest verbunden ist und dessen anderes Ende mit einer Rolle fest verbunden ist, die gehalten ist, sich in einem festen Schlitz zu bewegen.

13. Steuervorrichtung für Leitschaufeln mit variabler Einstellung, **dadurch gekennzeichnet, daß** sie eine Übertragungsstangenvorrichtung nach einem der Ansprüche 1 bis 12 umfaßt.

14. Turbomaschinenverdichter, **dadurch gekennzeichnet, daß** er eine Übertragungsstangenvorrichtung nach einem der Ansprüche 1 bis 12 umfaßt.

15. Turbomaschine, **dadurch gekennzeichnet, daß** sie eine Übertragungsstangenvorrichtung nach einem der Ansprüche 1 bis 12 umfaßt.
